# EUROPÄISCHE PATENTSCHRIFT

(11) **EP 3 922 095 B1**
(45) Veröffentlichungstag und Bekanntmachung des Hinweises auf die Patenterteilung: **12.08.2026**
(21) Anmeldenummer: 21170356.6
(22) Anmeldetag: 26.04.2021
(51) Int. Cl.: A01D 41/12

(54) **MÄHDRESCHER MIT EINER ENTLEERVORRICHTUNG**
COMBINE HARVESTER WITH AN EMPTYING DEVICE
MOISSONNEUSE-BATTEUSE DOTÉE D'UN DISPOSITIF DE DÉCHARGE

(30) Priorität: 10.06.2020 DE 102020115392
(43) Veröffentlichungstag der Anmeldung: 15.12.2021
(73) Patentinhaber: CLAAS Selbstfahrende Erntemaschinen GmbH, 33428 Harsewinkel (DE)
(72) Erfinder: Elpmann, Manuel, 33154 Salzkotten (DE)
(74) Vertreter: CLAAS Gruppe

(56) Entgegenhaltungen:
- EP-B1- 0 109 518
- EP-B1- 2 078 451
- EP-B1- 3 391 725
- US-A- 4 408 947
- US-A1- 2016 319 857
- US-A1- 2018 303 032

## Beschreibung

Die Erfindung betrifft einen Mähdrescher gemäß dem Oberbegriff des Anspruchs 1.

Aus der Praxis bekannte Mähdrescher (US 2018/303032 A1) sind in der Regel immer mit einem zur Zwischenspeicherung des Erntegutes während der Einsatzfahrt dienenden Erntegutspeicherbehältnis für Schüttgut und einer dem Erntegutspeicherbehältnis zugeordneten Entleervorrichtung ausgestattet. Die Entleervorrichtung besteht aus einem an dem Mähdrescher angeordneten im Wesentlichen horizontal verlaufenden Auslaufrohr, welches von einer Transportstellung in eine Arbeitsstellung verschwenkt werden kann. In der Transportstellung ist das Auslaufrohr im Wesentlichen in die Geometrie des Mähdreschergehäuses integriert, so dass es an diesem anliegt, während das Auslassende des Auslaufrohres in der ausgeschwenkten Arbeitsstellung so weit von dem Mähdrescher abragt, dass ein neben dem Mähdrescher befindliches Transportfahrzeug beladen werden kann. Zur Förderung des Erntegutes aus dem Korntank umfasst die Entleervorrichtung ein im Wesentlichen vertikal verlaufendes Förderrohr. Das Förderrohr weist zumindest eine darin angeordnete erste Förderschnecke auf. Das Auslaufrohr weist zumindest eine zweite Förderschnecke auf. Das Förderrohr und das Auslaufrohr sind durch einen Krümmerabschnitt miteinander verbunden.

Ein gattungsgemäßer Mähdrescher ist aus der EP 3 391 725 B1 bekannt. Die zuvor genannte zweite Förderschnecke besteht hier aus einem metallischen Werkstoff und wird innerhalb des Auslaufrohrs mittels Lagerhaltern zentriert und gelagert. Hierfür sind die Lagerhalter ortsfest am Auslaufrohr angeordnet und erstrecken sich in Richtung der Förderschnecke. Endseitig haltern die Lagerhalter mittels Lager die Förderschnecke, sodass die Förderschnecke drehbeweglich und zentriert innerhalb des Auslaufrohrs angeordnet ist.

Eine derartige Lagerung der im Auslaufrohr befindlichen zweiten Förderschnecke erweist sich als problematisch, da die im Gutfluss befindlichen Lagerhalter immer wieder zu Verstopfungen des Auslaufrohrs und infolgedessen zu Beschädigungen der in dem Auslaufrohr angeordneten zweiten Förderschnecke führen. Insbesondere Erntegut mit einer relativ hohen Feuchtigkeit und/oder Erntegut mit hohem Anteil an Nicht-Korn-Bestandteilen neigt zur Selbsthemmung in seinem Fließverhalten und staut sich oftmals vor den Lagerhaltern. Häufig treten hierdurch Verstopfungen bei der Förderung von Grassamen innerhalb des Auslaufrohrs auf.

Es ist deshalb Aufgabe der Erfindung, die beschriebenen Nachteile des Standes der Technik zu vermeiden und insbesondere eine lagerhalterfreie Anordnung der Förderschnecke innerhalb des Auslaufrohrs zu schaffen.

Diese Aufgabe wird erfindungsgemäß durch die kennzeichnenden Merkmale des Anspruchs 1 gelöst.

Gemäß dem Anspruch 1 wird ein Mähdrescher mit einem Erntegutspeicherbehältnis zur Aufnahme von Schüttgut sowie einer Entleervorrichtung zur Entleerung des Erntegutspeicherbehältnisses vorgeschlagen, welche ein im Wesentlichen vertikal verlaufendes Förderrohr, in dem zumindest eine erste Förderschnecke angeordnet ist, und ein im Wesentlichen horizontal verlaufendes, um eine Achse schwenkbares Auslaufrohr, in dem zumindest eine zweite Förderschnecke angeordnet ist, umfasst, wobei das Förderrohr und das Auslaufrohr durch einen Krümmerabschnitt miteinander verbunden sind, wobei die zweite Förderschnecke zumindest teilweise aus Kunststoff ausgebildet und einseitig gelagert ist.

Die Erfindung hat viele Vorteile. Eine Ausbildung der Schneckenwindungen der zweiten Förderschnecke aus Kunststoff ermöglicht ein Zentrieren der zweiten Förderschnecke gegenüber dem Auslaufrohr mittels der aus Kunststoff ausgebildeten Schneckenwindungen. Hierfür stehen die aus Kunststoff ausgebildeten Schneckenwindungen zumindest Abschnittsweise in Kontakt respektive Reibkontakt mit dem Auslaufrohr, sodass ein verschieben der zweiten Förderschnecke in radialer Richtung im Wesentlichen vermieden wird. Ein geringer Reibungskoeffizient der Gleitpaarung zwischen den aus Kunststoff ausgebildeten Schneckenwindungen und dem aus Metall ausgebildeten Auslaufrohr begünstigt eine solche Anordnung. Eine derartige Zentrierung der Schneckenwindungen ermöglicht eine lagerlose Anordnung der zweiten Förderschnecke innerhalb des Auslaufrohrs. Zwischen dem Auslaufrohr und der Förderschnecke befindliche Lagerhalter sind nicht weiter für die Lagerung der Förderschnecke erforderlich und werden nicht vorgesehen. Mithin wird ein Aufstauen des zu fördernden Ernteguts vor solchen Lagerhaltern und dadurch bedingte Verstopfungen vermieden. Weiterhin vermeidet der Kunststoff die Entstehung von Funken zwischen den in aller Regel aus Metall ausgebildeten Auslaufrohr und der Förderschnecke. Ein weiterer Vorteil ist die Gewichtsersparnis einer zumindest teilweise aus Kunststoff ausgebildeten Förderschnecke gegenüber einer aus Metall ausgebildeten Förderschnecke. Eine einseitige Lagerung der zweiten Förderschnecke, insbesondere auf der Einlaufseite der Förderschnecke, sichert die zweite Förderschnecke gegen ein Verrutschen in axialer Richtung.

In einer vorteilhaften Weiterbildung können die Schneckenwindungen der zweiten Förderschnecke radial außenseitig aus Kunststoff ausgebildet sein und die Schneckenwindungen die zweite Förderschnecke gegenüber dem Auslaufrohr zentrieren, wobei vorzugsweise innerhalb des Auslaufrohrs ausschließlich die Schneckenwindungen zur Zentrierung der zweiten Förderschnecke gegenüber dem Auslaufrohr vorgesehen sind. Dies ist besonders vorteilhaft um die Entstehung von Funken zu vermeiden. Hierbei kann der Kern der Schneckenwindungen weiterhin aus Metall bestehen und mit Kunststoff ummantelt sein.

Eine weitere vorteilhafte Weiterbildung sieht vor, dass die zweite Förderschnecke als eine erste Welle mit dieser umgebenden Schneckenwindungen ausgebildet ist, wobei die erste Welle aus Metall, insbesondere Aluminium, und die Schneckenwindungen aus Kunststoff ausgebildet sind. Die aus Metall ausgebildete Welle gewährleistet die erforderliche Steifigkeit und Stabilität der Förderschnecke, wobei Aluminium auf Grund seiner hohen Festigkeit und geringen Dichte zur Ausbildung der Welle besonders gut geeignet ist.

In einer bevorzugten Ausführungsform kann ein Winkelgetriebe die erste und zweite Förderschnecke trieblich miteinander verbinden, wobei vorzugsweise zur Zentrierung der zweiten Förderschnecke in axialer Richtung ausschließlich das Winkelgetriebe vorgesehen ist. Eine derartige Verbindung ermöglicht eine zuverlässige und robuste Übertragung eines Antriebsdrehmoments von der ersten Förderschnecke auf die zweite Förderschnecke. Das Winkelgetriebe kann zur Zentrierung der zweiten Förderschnecke in axialer Richtung an dem Krümmerabschnitts ortsfest befestigt sein.

Bevorzugt können den aus Kunststoff ausgebildeten Schneckenwindungen aus Metall ausgebildete Schneckenwindungen vorgeordnet sein, wobei die aus Metall ausgebildeten Schneckenwindungen insbesondere zwischen den aus Kunststoff ausgebildeten Schneckenwindungen und dem Winkelgetriebe angeordnet sind. Innerhalb des Krümmerabschnitts wird das Erntegut umgelenkt. Durch die Umlenkung werden die innerhalb des Krümmerabschnitts befindlichen Schneckenwindungen besonders beansprucht, so dass diese verschleißanfällig sind. Aus diesem Grund können den aus Kunststoff ausgebildeten Schneckenwindungen verschleißfeste und aus Metall ausgebildete Schneckenwindungen vorgeordnet sein.

Um die zweite Förderschnecke auf einfache Art und Weise an dem Winkelgetriebe anzuordnen, sieht eine vorteilhafte Ausgestaltung vor, dass die zweite Förderschnecke an dem Winkelgetriebe einseitig gelagert ist, wobei vorzugsweise die Abtriebswelle des Winkelgetriebes und die zweite Förderschnecke mittels eines Verbindungselements einseitig an dem Winkelgetriebe gelagert ist. Hierfür kann das Verbindungselement im Wesentlichen aus Metall, insbesondere Stahl, ausgebildet sein, sodass eine zuverlässige Drehmomentübertragung von dem Winkelgetriebe auf die zweite Förderschnecke erreicht wird.

Bevorzugt kann das Verbindungselement als eine dritte Förderschnecke ausgebildet sein, wobei die Schneckenwindungen der dritten Förderschnecken im Wesentlichen aus Metall, insbesondere aus Stahl, ausgebildet sind. Mittels eines derartigen Verbindungselements können auf einfache Art und Weise den aus Kunststoff ausgebildeten Schneckenwindungen der zweiten Förderschnecke metallische Schneckenwindungen prozesstechnisch vorgeordnet werden.

Vorzugsweise kann das Verbindungselement einen zylinderförmigen Abschnitt aufweisen, auf welchem die erste Welle verdrehfest angeordnet ist. Hierbei kann der zylinderförmige Abschnitt mit der Innenseite der ersten Welle verklebt werden, sodass das Antriebsdrehmoment auf die aus Metall ausgebildet erste Welle übertragen wird, welche zur Kraftaufnahme besser als die aus Kunststoff ausgebildeten Schneckenwindungen geeignet ist.

Vorteilhaft ist es, wenn die Schneckenwindungen der dritten Förderschnecke und die Schneckenwindungen der zweiten Förderschnecke ortsfest miteinander verbunden sind. Eine derartige Verbindung verhindert ein Verändern der Position der Schneckenwindungen relativ zueinander, welches beispielsweise durch Verformungen der Schneckenwindungen bedingt sein kann.

In weiterer Ausgestaltung der Erfindung wird vorgeschlagen, dass der Kunststoff ein ultrahochmolekulares Polyethylen, insbesondere ein Polyethylen mit einem Molekulargewicht im Bereich von 1 Mio. g./mol bis 10 Mio. g/mol, ist. Derartige Kunststoffe weisen neben ihren geringen Gewicht und hoher Stabilität ebenfalls hervorragende Gleit- und Verschleißeigenschafften auf. Ein solches Polyethylen wird beispielsweise als Robalon bezeichnet, welches vorzugsweise als Kunststoff für die zweite Förderschnecke Verwendung findet.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Darstellung eines Mähdreschers in einer Seitenansicht;
- Figur 2: eine schematische Darstellung einer innerhalb des Auslaufrohrs angeordneten Förderschnecke und eines an der Förderschnecke angeordneten Verbindungselements, welches zum trieblichen verbinden der Förderschnecke mit einem Winkelgetriebe ist;
- Figur 3: eine schematische Darstellung der ersten und zweiten Förderschnecke, wobei die zweite Förderschnecke mittels eines als dritte Förderschnecke ausgebildeten Verbindungselements und eines Winkelgetriebes trieblich miteinander verbunden sind.

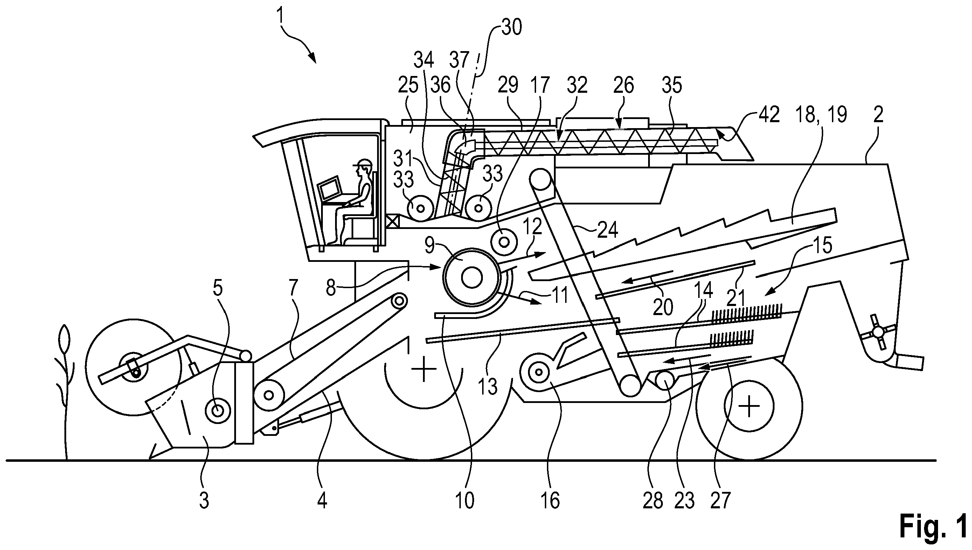

Der in Fig. 1 schematisch dargestellte und an sich bekannte Mähdrescher 1 besteht aus einem mit einem Fahrwerk verbundenen Traggestell, auf dem ein mehrteiliges Maschinengehäuse 2 befestigt ist. Der Mähdrescher 1 nimmt ein als Getreideschneidwerk ausgeführtes Vorsatzgerät 3 auf, welches in an sich bekannter Weise mit dem Schrägförderer 4 des Mähdreschers 1 verbunden ist. Das Querförderorgan 5 des Schneidwerkes 3 übergibt das Erntegut an den Schrägförderer 4, wobei dieser das Erntegut mittels umlaufendem Förderer 7 in seinem obenseitigen, rückwärtigen Bereich an das Dreschwerk 8 des Mähdreschers 1 übergibt. In dem Dreschwerk 8 wird das Erntegut zwischen den Dreschtrommeln 9 und einem diese wenigstens teilweise ummantelnden Dreschkorb 10 hindurchgeführt und in zumindest zwei Teilströme 11, 12 getrennt. Der erste Teilstrom 11 besteht im Wesentlichen aus Körnern, Kurzstroh und Spreu und wird über einen Vorbereitungsboden 13 unmittelbar einer aus verschiedenen Siebebenen 14 bestehenden Reinigungsvorrichtung 15 zugeführt. Die Reinigungsvorrichtung 15 nimmt zudem eine Gebläseeinheit 16 auf, die einen die Siebebenen 14 durchsetzenden Luftstrom generiert.

Der im rückwärtigen Bereich des Dreschwerks 8 aus diesem austretende weitere, im Wesentlichen aus Stroh und einem Restkornanteil bestehende Teilstrom 12 wird mittels einer Strohleittrommel 17 auf eine als Hordenschüttler 18 ausgeführtes Abscheidevorrichtung 19 geleitet. Durch die Bewegung des Hordenschüttlers 18 wird ein großer Anteil der in der Strohschicht enthaltenen Körner 20 auf dem Hordenschüttler 18 abgeschieden und über einen sogenannten Rücklaufboden 21 und den Vorbereitungsboden 13 an die Reinigungseinheit 15 übergeben. Alternativ kann die Abscheidevorrichtung 19 als zumindest ein Axial-Trennrotor ausgebildet sein.

In der Reinigungsvorrichtung 15 wird schließlich aus den in sie eingeleiteten verschiedenen Gutströmen 11, 20 ein gereinigter Körnerstrom 23 mittels Förderelevatoren 24 in ein Erntegutspeicherbehältnis 25 gefördert und dort zwischengespeichert. Die Entleerung des Erntegutspeicherbehältnis 25 erfolgt mittels einer Entleervorrichtung 26.

Der die Reinigungsvorrichtung 15 zusätzlich verlassende und als Überkehrgutstrom 27 bezeichnete Massestrom besteht zum einen aus Teilen des Erntegutes, die schwerer sind als die Spreu und auch schwerer als die Körner des Gutstroms 20 selbst, so dass sie nicht von der Gebläseeinheit 16 aus dem Siebkasten geblasen werden können. Das sind unausgedroschene Ähren oder ungenügend entgrannte Körner, die deshalb erneut gedroschen werden müssen. Zum anderen befinden sich aber auch einzelne Körner in dem Überkehrgutstrom 27. Der Überkehrgutstrom 27 wird von einer Überkehrschnecke 28 dem Dreschwerk 8 erneut zugeführt.

Die Entleervorrichtung 26 besteht aus einem Auslaufrohr 29, welches um eine Achse 30 von einer in Fig. 1 dargestellten Transportstellung in eine Arbeitsstellung verschwenkbar ist, wobei die Arbeitsstellung beispielsweise in etwa rechtwinklig zur Zeichnungsebene liegt, sowie einem Förderrohr 31. In dem Auslaufrohr 29 ist eine ein- oder mehrteilig ausgebildete Fördereinrichtung 32 angeordnet. Bei der Entleerung des Erntegutspeicherbehältnisses 25 wird das Erntegut mittels zweier in dem Erntegutspeicherbehältnis 25 angeordneten Querschnecken 33 zumindest einer unter einem Winkel zu den Querförderschnecken 33 geneigt angeordneten ersten Förderschnecke 34, die im Inneren des Förderrohres 31 angeordnet ist, zugeführt. Die erste Förderschnecke 34 fördert das Erntegut im Wesentlichen in vertikaler Richtung. Die erste Förderschnecke 34 wird durch eine nicht dargestellte Aktuatorik angetrieben.

Das um die Achse 30 schwenkbare Auslaufrohr 29 weist zumindest eine im Inneren angeordnete zweite Förderschnecke 35 auf, welche durch ein Winkelgetriebe 36 trieblich mit der ersten Förderschnecke 34 verbunden ist. Das Winkelgetriebe 36 ist in einem Krümmerabschnitt 37 angeordnet, welcher das Förderrohr 31 und das Auslaufrohr 29 miteinander verbindet.

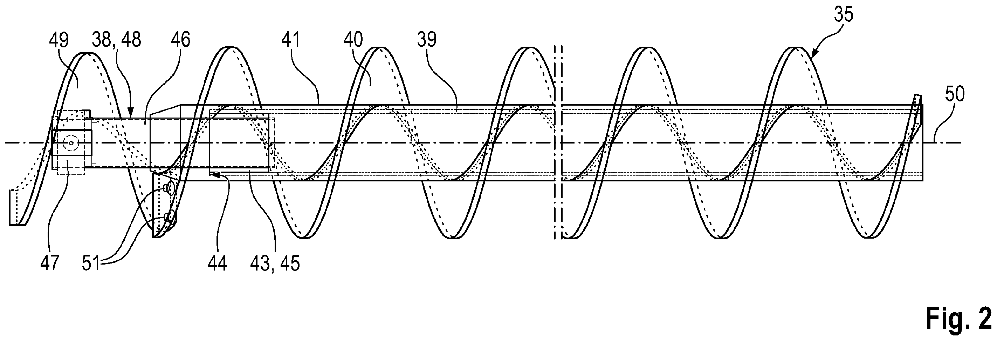

Fig. 2 zeigt in einer schematischen Darstellung die zweite Förderschnecke 35 und ein an der zweiten Förderschnecke 35 angeordnetes Verbindungselement 38, welches zum trieblichen verbinden der zweiten Förderschnecke 35 mit dem Winkelgetriebe 36 vorgesehen ist. Die zweite Förderschnecke 35 ist als eine erste Welle 39 mit dieser umgebenden Schneckenwindungen 40 ausgebildet. Die erste Welle 39 ist in Fig. 2 mittels gestrichelter Linien dargestellt und besteht aus einem Aluminiumrohr. Radial außenseitig weist die erste Welle einen Kunststoffmantel 41 auf. Auf dem Kunststoffmantel 41 sind die Schneckenwindungen 40 der zweiten Förderschnecke 35 angeordnet, wobei die Schneckenwindungen 40 ebenfalls aus Kunststoff bestehen und einteilig mit dem Kunststoffmantel 41 ausgebildet sind.

Die Schneckenwindungen 40 der zweiten Förderschnecke 35 stehen zumindest Abschnittsweise mit der Innenseite 42 des Auflaufrohrs 29 in Kontakt, wobei die Kontaktfläche bei einer Rotation der zweiten Förderschnecke 35 eine Reibfläche bildet. Der Kontakt zwischen dem Auslaufrohr 29 und der zweiten Förderschnecke 35 zentriert die zweite Förderschnecke 35 innerhalb des Auslaufrohrs 29, so dass diese gegen ein Verrutschen in radialer Richtung 54 im Wesentlichen gesichert ist. Die Ausbildung der Schneckenwindungen 40 aus Kunststoff, insbesondere eine Ausbildung der Schneckenwindungen 40 radial außenseitig aus Kunststoff, vermeidet bei einer Rotation der Förderschnecke 35 die Entstehung von Funken auf der metallischen Oberfläche 42 des Auslaufrohrs 29. Das aus Metall ausgebildete Auslaufrohr 29 bietet hierbei weiterhin die erforderliche Stabilität.

Die Schneckenwindungen 40 sind aus einem starren und verschleißfesten Kunststoff hergestellt. Im Ausführungsbeispiel ist der Kunststoff ein ultrahochmolekulares Polyethylen. Derartige Kunststoffe weisen ein Molekulargewicht im Bereich von 1 Mio. g./mol bis 10 Mio. g/mol auf. Vorzugsweise handelt es sich bei dem Kunststoff um Robalon.

Die zweite Förderschnecke 35 ist mittels des Verbindungselements 38 mit dem Winkelgetriebe 36 verbunden. Hierfür umfasst das Verbindungselement einen zylinderförmigen Abschnitt 43, auf welchem radial außenseitig die erste Welle 39, welche eine erste Hohlwelle ist, verdrehfest angeordnet, beispielsweise verklebt, ist. Der zylinderförmige Abschnitt 43 wird durch einen axialen Anschlag 44 begrenzt, an welchem die erste Welle 39 stirnseitig angrenzt. Im Ausführungsbeispiel wird der zylinderförmige Abschnitt 43 von einer zweiten Welle 45, insbesondere Hohlwelle 45, gebildet. Die zweite Hohlwelle 45 ist auf einer Verbindungswelle 46 angeordnet, wobei die Verbindungswelle 46 an der Abtriebswelle (nicht gezeigt) des Winkelgetriebes 36 angeordnet ist. Hierfür kann die Verbindungswelle 46 beispielsweise eine Halterung 47 zum formschlüssigen Verbinden der Verbindungswelle 46 mit der Abtriebswelle aufweisen. Eine derartige Halterung ist in Fig. 2 ortsfest mit der Verbindungswelle 46 verbunden, insbesondere verschweißt.

In einer alternativen Ausgestaltung können die Verbindungswelle 46 und die zweite Hohlwelle 45 einteilig ausgebildet sein. Die Verbindungswelle 46, die Hohlwelle 46 und die Halterung 47 bestehen aus Metall, vorzugsweise Stahl und bilden das Verbindungselement 38. Ein derartig ausgebildetes Verbindungselement 38 ermöglicht es ein Antriebsdrehmoment ausgehend von dem Winkelgetriebe 36 auf die innenliegende erste Welle 39 der zweiten Förderschnecke 35 zu übertragen, welche auf Grund ihrer metallischen Struktur und der daraus resultierenden Stabilität besser zur Aufnahme des Antriebsdrehmoments geeignet ist als dessen aus Kunststoff ausgebildeten Schneckenwindungen 40.

Das Verbindungselement 38 ist als weitere dritte Förderschnecke 48 ausgebildet. Im Detail bedeutet dies, dass radial außenseitig an dem Verbindungselement Schneckenwindungen 49 angeordnet sind. Die Schneckenwindungen 49 bestehen aus Metall, vorzugsweise aus Stahl.

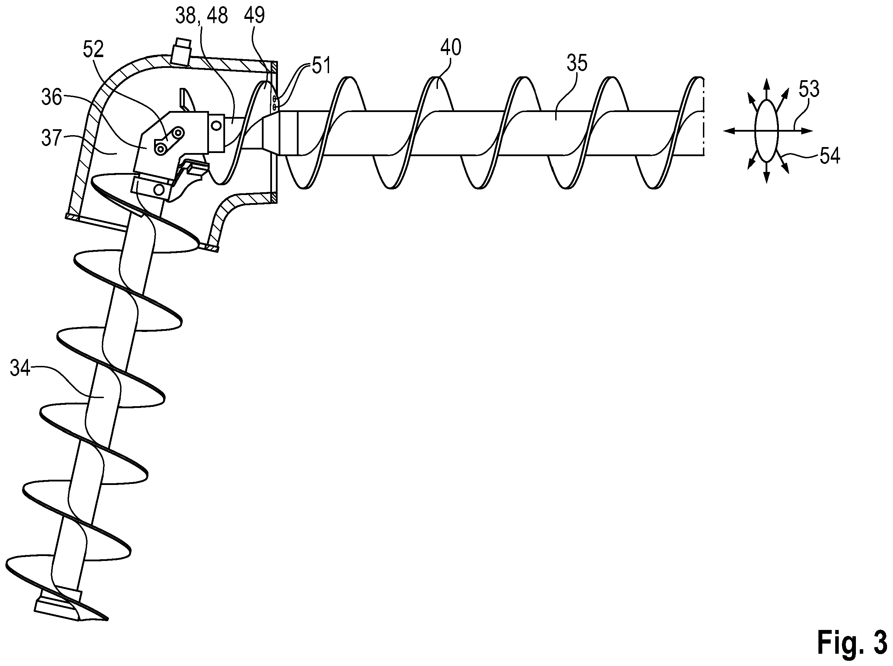

In. Fig. 3 sind in einer schematischen Abbildung die erste Förderschnecke 34 und zweite Förderschnecke 35 dargestellt, wobei die zweite Förderschnecke 35 mittels des als dritte Förderschnecke 48 ausgebildeten Verbindungselements 38 und des Winkelgetriebes 36 trieblich miteinander verbunden sind.

Die zwischen dem Winkelgetriebe 36 und den aus Kunststoff ausgebildeten Schneckenwindungen 40 befindlichen metallischen Schneckenwindungen 49 sind im Wesentlichen innerhalb des Krümmerabschnitts 37 angeordnet und weisen die selbe Rotationsachse 50 wie die zweite Förderschnecke 35 auf. Die Schneckenwindungen 49 des Verbindungselements 38 und die Schneckenwindungen 40 der zweiten Förderschnecke 35 sind endseitig miteinander ortsfest verbunden, beispielsweise mittels Schrauben 51 verschraubt. Hierdurch wird ein Verformen der eingangsseitigen aus Kunststoff ausgebildeten Schneckenwindungen 40 der zweiten Förderschnecke 35 vermieden, welche zu einem ungünstigen Übergabeverhalten des Ernteguts von den metallischen Schneckenwindungen 49 hin zu den aus Kunststoff ausgebildeten Schneckenwindungen 40 führen kann.

Das Winkelgetriebe 36 ist ortsfest innerhalb des Krümmerabschnitts 37 angeordnet, beispielsweise mittels Streben 52 mit dem Krümmerabschnitt 37 verschraubt oder verschweißt. Die einseitige Lagerung der zweiten Förderschnecke 35, insbesondere mittels des Verbindungselements 38, an dem Winkelgetriebe 36, verhindert ein Verschieben der zweiten Förderschnecke 35 in axialer Richtung 53. Auf Grund der Zentrierung der zweiten Förderschnecke 35 mittels der aus Kunststoff ausgebildeten Schneckenwindungen 40 in radialer Richtung 54 ist ausschließlich eine einseitige Lagerung der zweiten Förderschnecke 35 an dem Winkelgetriebe 36 vorgesehen, sodass auf etwaige Lagerhalter innerhalb des Auslaufrohrs 29 verzichtet werden kann.

In einer alternativen Ausgestaltung kann die zweite Förderschnecke 35 unmittelbar an dem Winkelgetriebe 36 angeordnet sein, wobei sämtliche Schneckenwindungen 40, 49 der im Auslaufrohr angeordneten Förderschnecke 35 aus Kunststoff ausgebildet sind. Alternativ liegt eine unmittelbar an dem Winkelgetriebe 36 angeordnete zweite Förderschnecke 35, welche auf einer dem Winkelgetriebe 36 zugewandten Seite, insbesondere innerhalb des Krümmerabschnitt 37, aus Stahl ausgebildete Schneckenwindungen 49 und auf einer dem Auslass des Auslaufrohrs 29 zugewandten Seite aus Kunststoff ausgebildeten Schneckenwindungen 40 aufweist, ebenfalls im Rahmen der Erfindung. Die aus Stahl ausgebildeten Schneckenwindungen 49 weisen hierbei vorzugsweise einen geringeren Außendurchmesser als die aus Kunststoff ausgebildeten Schneckenwindungen 40 auf, sodass diese beabstandet zu dem Auslaufrohr 29 sind.

**Bezugszeichenliste:**

| | | | |
|---|---|---|---|
| 1 | Mähdrescher | 34 | Erste Förderschnecke |
| 2 | Maschinengehäuse | 35 | Zweite Förderschnecke |
| 3 | Vorsatzgerät | 36 | Winkelgetriebe |
| 4 | Schrägförderer | 37 | Krümmerabschnitt |
| 5 | Querförderorgan | 38 | Verbindungselement |
| 7 | Förderer | 39 | Erste Welle |
| 8 | Dreschwerk | 40 | Schneckenwindungen (zweite Förderschnecke) |
| 9 | Dreschtrommeln | 41 | Kunststoffmantel |
| 10 | Dreschkorb | 42 | Innenseite |
| 11 | Teilstrom | 43 | Abschnitt |
| 12 | Teilstrom | 44 | Anschlag |
| 13 | Vorbereitungsboden | 45 | Zweite Welle |
| 14 | Siebebenen | 46 | Verbindungswelle |
| 15 | Reinigungsvorrichtung | 47 | Halterung |
| 16 | Gebläseeinheit | 48 | Dritte Förderschnecke |
| 17 | Strohleittrommel | 49 | Schneckenwindungen (dritte Förderschnecke) |
| 18 | Hordenschüttler | 50 | Rotationsachse |
| 19 | Abscheidevorrichtung | 51 | Schraube |
| 20 | Gutstrom | 52 | Strebe |
| 21 | Rücklaufboden | 53 | Axiale Richtung |
| 23 | Körnerstrom | 54 | Radiale Richtung |
| 24 | Förderelevatoren | | |
| 25 | Erntegutspeicherbehältnis | | |
| 26 | Entleervorrichtung | | |
| 27 | Überkehrgutstrom | | |
| 28 | Überkehrschnecke | | |
| 29 | Auslaufrohr | | |
| 30 | Achse | | |
| 31 | Förderrohr | | |
| 32 | Fördereinrichtung | | |
| 33 | Querschnecke | | |

## Patentansprüche

1. Mähdrescher (1) mit einem Erntegutspeicherbehältnis (25) zur Aufnahme von Schüttgut sowie einer Entleervorrichtung (26) zur Entleerung des Erntegutspeicherbehältnisses (25), welche ein im Wesentlichen vertikal verlaufendes Förderrohr (31), in dem zumindest eine erste Förderschnecke (34) angeordnet ist, und ein im Wesentlichen horizontal verlaufendes, um eine Achse (30) schwenkbares Auslaufrohr (29), in dem zumindest eine zweite Förderschnecke (35) angeordnet ist, umfasst, wobei das Förderrohr (31) und das Auslaufrohr (29) durch einen Krümmerabschnitt (37) miteinander verbunden sind,
**dadurch gekennzeichnet, dass** die zweite Förderschnecke (35) zumindest teilweise aus Kunststoff ausgebildet und einseitig gelagert ist.

2. Mähdrescher (1) nach Anspruch 1, **dadurch gekennzeichnet, dass** die Schneckenwindungen (40) der zweiten Förderschnecke (35) radial außenseitig aus Kunststoff ausgebildet sind und die Schneckenwindungen (40) die zweite Förderschnecke (35) gegenüber dem Auslaufrohr (29) zentrieren, wobei vorzugsweise innerhalb des Auslaufrohrs (29) ausschließlich die Schneckenwindungen (40) zur Zentrierung der zweiten Förderschnecke (35) gegenüber dem Auslaufrohr (29) vorgesehen sind.

3. Mähdrescher (1) nach Anspruch 1, **dadurch gekennzeichnet, dass** die zweite Förderschnecke (35) als eine erste Welle (39) mit dieser umgebenden Schneckenwindungen (40) ausgebildet ist, wobei die erste Welle (39) aus Metall, insbesondere Aluminium, und die Schneckenwindungen (40) aus Kunststoff ausgebildet sind.

4. Mähdrescher (1) nach einem der Ansprüche 1 bis 3, **dadurch gekennzeichnet, dass** ein Winkelgetriebe (36) die erste und zweite Förderschnecke (34, 35) trieblich miteinander verbindet, wobei vorzugsweise zur Zentrierung der zweiten Förderschnecke (35) in axialer Richtung (53) ausschließlich das Winkelgetriebe (36) vorgesehen ist.

5. Mähdrescher (1) nach Anspruch 2, **dadurch gekennzeichnet, dass** den aus Kunststoff ausgebildeten Schneckenwindungen (40) aus Metall ausgebildete Schneckenwindungen (49) vorgeordnet sind, wobei die aus Metall ausgebildeten Schneckenwindungen (49) insbesondere zwischen den aus Kunststoff ausgebildeten Schneckenwindungen (40) und dem Winkelgetriebe (36) angeordnet sind.

6. Mähdrescher (1) nach Anspruch 4, **dadurch gekennzeichnet, dass** die zweite Förderschnecke (35) an dem Winkelgetriebe (36) einseitig gelagert ist, wobei vorzugsweise die Abtriebswelle des Winkelgetriebes (36) und die zweite Förderschnecke (35) mittels eines Verbindungselements (38) einseitig an dem Winkelgetriebe (36) gelagert ist.

7. Mähdrescher (1) nach Anspruch 6, **dadurch gekennzeichnet, dass** das Verbindungselement (38) im Wesentlichen aus Metall, insbesondere Stahl, ausgebildet ist.

8. Mähdrescher (1) nach einem der Ansprüche 6 oder 7, **dadurch gekennzeichnet, dass** das Verbindungselement (38) als eine dritte Förderschnecke (48) ausgebildet ist, wobei die Schneckenwindungen (49) der dritten Förderschnecken (48) im Wesentlichen aus Metall, insbesondere aus Stahl, ausgebildet sind.

9. Mähdrescher (1) nach einem der Ansprüche 6 bis 8, **dadurch gekennzeichnet, dass** das Verbindungselement (38) einen zylinderförmigen Abschnitt (43) aufweist, auf welchem die erste Welle (39) verdrehfest angeordnet ist.

10. Mähdrescher (1) nach Anspruch 8, **dadurch gekennzeichnet, dass** die Schneckenwindungen (49) der dritten Förderschnecke (48) und die Schneckenwindungen (40) der zweiten Förderschnecke (35) ortsfest miteinander verbunden sind.

11. Mähdrescher (1) nach einem der Ansprüche 1 bis 10, **dadurch gekennzeichnet, dass** der Kunststoff ein ultrahochmolekulares Polyethylen, insbesondere ein Polyethylen mit einem Molekulargewicht im Bereich von 1 Mio. g./mol bis 10 Mio. g/mol, ist.

## Claims

1. Combine harvester (1) with a crop storage container (25) for receiving bulk material, and an unloading device (26) for emptying the crop storage container (25), which unloading device comprises a substantially vertical conveyor tube (31) in which is arranged at least one first auger (34), and an outlet pipe (29), the latter extending substantially horizontally, being pivotable about an axis (30) and having at least one second auger (35) arranged therein, wherein the conveyor tube (31) and the outlet tube (29) are connected to one another by way of an elbow section (37),
**characterized in that** the second auger (35) is at least partially made of plastic and is mounted on one side.

2. Combine harvester (1) according to Claim 1, **characterized in that** the auger flights (40) of the second auger (35) are formed radially on the outside from plastics material, and the auger flights (40) centre the second auger (35) in relation to the outlet pipe (29), wherein exclusively the auger flights (40) for centring the second auger (35) in relation to the outlet pipe (29) are preferably provided within the outlet pipe (29).

3. Combine harvester (1) according to Claim 1, **characterized in that** the second auger (35) is formed as a first shaft (39) with auger flights (40) surrounding the latter, wherein the first shaft (39) is formed from metal, in particular aluminium, and the auger flights (40) are formed from plastics material.

4. Combine harvester (1) according to one of Claims 1 to 3, **characterized in that** a mitre gear (36) operatively connects the first and the second auger (34, 35) to one another for driving, wherein exclusively the mitre gear (36) is preferably provided for centring the second auger (35) in the axial direction (53).

5. Combine harvester (1) according to Claim 2, **characterized in that** auger flights (49) formed from metal are arranged upstream of the auger flights (40) formed from plastics material, wherein the auger flights (49) formed from metal are in particular arranged between the auger flights (40) formed from plastics material and the mitre gear (36).

6. Combine harvester (1) according to Claim 4, **characterized in that** the second auger (35) is mounted on one side on the mitre gear (36), wherein preferably the output shaft of the mitre gear (36) and the second auger (35) are mounted on one side on the mitre gear (36) by means of a connecting element (38).

7. Combine harvester (1) according to Claim 6, **characterized in that** the connecting element (38) is formed substantially from metal, in particular steel.

8. Combine harvester (1) according to one of Claims 6 or 7, **characterized in that** the connecting element (38) is formed as a third auger (48), wherein the auger flights (49) of the third augers (48) are formed substantially from metal, in particular from steel.

9. Combine harvester (1) according to one of Claims 6 to 8, **characterized in that** the connecting element (38) has a cylindrical portion (43) on which the first shaft (39) is arranged so as to be resistant to twisting.

10. Combine harvester (1) according to Claim 8, **characterized in that** the auger flights (49) of the third auger (48) and the auger flights (40) of the second auger (35) are fixedly connected to one another.

11. Combine harvester (1) according to one of Claims 1 to 10, **characterized in that** the plastic is an ultra-high molecular weight polyethylene, in particular a polyethylene with a molecular weight in the range from 1 million g/mol to 10 million g/mol.

## Revendications

1. Moissonneuse-batteuse (1) avec un récipient de stockage de produit de récolte (25) destiné à recevoir des matières en vrac et un dispositif de vidange (26) destiné à vider le récipient de stockage de produit de récolte (25), lequel comprend un tuyau de transport (31) s'étendant sensiblement verticalement, dans lequel est disposée au moins une première vis sans fin de transport (34), et un tuyau de sortie (29) s'étendant sensiblement horizontalement, pouvant pivoter autour d'un axe (30), dans lequel est disposée au moins une deuxième vis sans fin de transport (35), le tuyau de transport (31) et le tuyau de sortie (29) étant reliés l'un à l'autre par une section coudée (37),
**caractérisée en ce que** la deuxième vis sans fin de transport (35) est formée au moins en partie à partir de matière plastique et est montée sur un côté.

2. Moissonneuse-batteuse (1) selon la revendication 1, **caractérisée en ce que** les spires (40) de vis sans fin de la deuxième vis sans fin de transport (35) sont formées radialement à l'extérieur à partir de matière plastique et les spires (40) de vis sans fin centrent la deuxième vis sans fin de transport (35) par rapport au tuyau de sortie (29), de préférence exclusivement les spires (40) de vis sans fin destinées au centrage de la deuxième vis sans fin de transport (35) par rapport au tuyau de sortie (29) sont prévues à l'intérieur du tuyau de sortie (29).

3. Moissonneuse-batteuse (1) selon la revendication 1, **caractérisée en ce que** la deuxième vis sans fin de transport (35) est formée comme un premier arbre (39) avec des spires (40) de vis sans fin l'entourant, le premier arbre (39) étant formé à partir de métal, en particulier à partir d'aluminium, et les spires (40) de vis sans fin étant formées à partir de matière plastique.

4. Moissonneuse-batteuse (1) selon l'une des revendications 1 à 3, **caractérisée en ce qu'**un engrenage angulaire (36) relie entre elles, de manière entraînante, la première et la deuxième vis sans fin de transport (34, 35), l'engrenage angulaire (36) étant de préférence prévu exclusivement pour le centrage de la deuxième vis sans fin de transport (35) dans la direction axiale (53).

5. Moissonneuse-batteuse (1) selon la revendication 2, **caractérisée en ce que** des spires (49) de vis sans fin formées à partir de métal sont disposées en amont des spires (40) de vis sans fin formées à partir de matière plastique, les spires (49) de vis sans fin formées à partir de métal étant disposées en particulier entre les spires (40) de vis sans fin formées à partir de matière plastique et l'engrenage angulaire (36).

6. Moissonneuse-batteuse (1) selon la revendication 4, **caractérisée en ce que** la deuxième vis sans fin de transport (35) est montée d'un côté sur l'engrenage angulaire (36), l'arbre de sortie de l'engrenage angulaire (36) et la deuxième vis sans fin de transport (35) étant montés de préférence d'un côté sur l'engrenage angulaire (36) au moyen d'un élément de liaison (38).

7. Moissonneuse-batteuse (1) selon la revendication 6, **caractérisée en ce que** l'élément de liaison (38) est formé sensiblement à partir de métal, en particulier d'acier.

8. Moissonneuse-batteuse (1) selon l'une des revendications 6 ou 7, **caractérisée en ce que** l'élément de liaison (38) est formé comme une troisième vis sans fin de transport (48), les spires (49) de vis sans fin des troisièmes vis sans fin de transport (48) étant formées sensiblement à partir de métal, en particulier d'acier.

9. Moissonneuse-batteuse (1) selon l'une des revendications 6 à 8, **caractérisée en ce que** l'élément de liaison (38) comporte une section cylindrique (43) sur laquelle le premier arbre (39) est disposé de manière solidaire en rotation.

10. Moissonneuse-batteuse (1) selon la revendication 8, **caractérisée en ce que** les spires (49) de vis sans fin de la troisième vis sans fin de transport (48) et les spires (40) de vis sans fin de la deuxième vis sans fin de transport (35) sont reliées les unes aux autres de manière fixe.

11. Moissonneuse-batteuse (1) selon l'une des revendications 1 à 10, **caractérisée en ce que** la matière plastique est un polyéthylène de poids moléculaire très élevé, en particulier un polyéthylène avec un poids moléculaire dans la plage de 1 million g/mol à 10 millions g/mol.
